Europäisches Patentamt

(19) European Patent Office

Office européen des brevets

(11) **EP 0 531 935 B1**

(12) **EUROPEAN PATENT SPECIFICATION**

(45) Date of publication and mention
of the grant of the patent:
**24.04.1996 Bulletin 1996/17**

(51) Int. Cl.$^6$: **A23L 1/076**

(21) Application number: **92115341.7**

(22) Date of filing: **08.09.1992**

(54) **A method for preparing a clear royal jelly solution**

Verfahren zur Herstellung von klarer Königsgeleelösung

Méthode de préparation d'une solution claire de gelee royale

(84) Designated Contracting States:
**DE FR GB NL**

(30) Priority: **09.09.1991 JP 255921/91**
**13.01.1992 JP 21650/92**

(43) Date of publication of application:
**17.03.1993 Bulletin 1993/11**

(73) Proprietor: **BIOX CORPORATION**
**Chuo-ku, Tokyo (JP)**

(72) Inventors:
• **Nomura, Junichiro**
**Omiya-shi, Saitama-ken (JP)**
• **Umezawa, Junko**
**Omiya-shi, Saitama-ken (JP)**
• **Yuasa, Takayuki**
**Nitta-gun, Gunma-ken (JP)**
• **Kobayashi, Yoichi**
**Omiya-shi, Saitama-ken (JP)**

(74) Representative: **Boeters, Hans Dietrich, Dr. et al**
**Patentanwälte Boeters & Bauer,**
**Bereiteranger 15**
**D-81541 München (DE)**

(56) References cited:
**JP-A- 4 200 355**

• **PATENT ABSTRACTS OF JAPAN vol. 015, no. 377**
**(C-0870)24 September 1991**
• **DATABASE WPIL Section Ch, Week 8324, 1983**
**Derwent Publications Ltd., London, GB; Class**
**B04, AN 83-57919K**

Printed by Rank Xerox (UK) Business Services
2.11.2/3.4

**Description**

FIELD OF THE INVENTION

The present invention relates to a method for preparing a clear royal jelly solution. More specifically, the present invention relates to a method for preparing a clear royal jelly aqueous solution having the same characteristic properties as those of fresh royal jelly, wherein almost all of the components of royal jelly are solubilized for use.

BACKGROUND OF THE INVENTION

Royal jelly is an opaque-colored substance with a strong acid taste, which is secreted from the secretory glands of young worker bees (infrapharyngeal glands, mandibular glands) and which contains well-balanced nutritious elements, such as vitamins, minerals, amino acids, acetylcholine, 10-hydroxydecenic acid, sterol, hormones, and the like. Therefore, royal jelly has traditionally been utilized in the forms of fresh type, capsule type, beverage type, etc., as health foods, medicinal products, and cosmetics.

It is needless to say that, together with flavor, the appearance of beverage products, such as transparency and color, is a significant characteristic property for merchandising. However, royal jelly is an opaque substance with viscosity, enriched with protein, so if added to beverages as a raw material, royal jelly shows poor solubility that results in opaqueness or deposition after separation. Thus, royal jelly is difficult to handle as a raw material for beverages demanding stability and transparency. Therefore, a large amount of royal jelly cannot be added when it is intended to simply mix royal jelly with conventional beverage raw materials, because of the development of opaqueness and precipitates.

Royal jelly is supplied in the fresh or frozen state, and may be ingested as such. Royal jelly is hard to handle because it should be stored in a refrigerator or freezer, as it spoils easily. Because of its viscosity, specific odor, and astringency, royal jelly is not readily ingested as it is. Therefore, royal jelly is prepared into a powder or a state appropriate for easy digestion by mixing it with sugars and honey, or the resulting royal jelly is filled into capsules or prepared into tablets. Furthermore, the mixing thereof with wine, liquor, flower liquor, refreshing beverage and the like, is also in practice.

Also in practice is a method comprising suspending royal jelly in water thereby extracting the effective components, subsequently removing the turbidity by centrifugation or the like, and using the resulting clear solution as a raw beverage material. According to the method, however, not only the amount of 10-hydroxydecenic acid after recovery is small, but also the phenomenon of the generation of opaqueness and precipitates has never been eliminated if royal jelly is added in a large amount. Therefore, conventional royal jelly beverages have contained only 50 to 500 mg of royal jelly, as the content converted to fresh royal jelly, per bottle (0.1 to 1.0% by weight per 50-ml bottle). The Japanese Fair Trade Regulation requires that 10-hydroxydecenic acid be employed as the effective component of the royal jelly as an indicator for determining the purity of royal jelly, and that the content thereof should be 1.4% by weight and 3.5% by weight for fresh-type royal jelly and dry royal jelly, respectively.

In order to improve such drawbacks, a method is proposed, comprising adding a given concentration of ethyl alcohol to a suspension of royal jelly prior to heating and extraction, adjusting the pH to a given range after extraction, subsequently subjecting the resulting solution to centrifugation or membrane filtration, and using the resulting extract for royal jelly beverages (see Japanese Patent Application (OPI) No. 215268/1989).

According to the method, however, some effective components of royal jelly, particularly alcohol-insoluble proteins and the like, are removed, although 10-hydroxydecenic acid is still contained in the extract. Royal jelly contains proteins in large amount (36 to 42% of solids), which are possibly involved in the various nutritional and physiological functions of royal jelly. Furthermore, royal jelly is an extremely expensive food material, so alcohol extraction in which a variety of the effective components are removed is not satisfactory in terms of dietetics.

As a method for preparing a clear and stable royal jelly solution containing the nutritious components of royal jelly, alternatively, a method is proposed that comprises separating the insoluble components of royal jelly and subjecting them to thermal treatment in an aqueous alkali solution (Japanese Patent Application No. 333642/1990). Also, another method is proposed that comprises treating a royal jelly suspension with protease, thereby solubilizing the insoluble components (Japanese Patent Application No. 333641/1990). The former method requires the separation process of the insoluble components; whereas by the latter enzyme process, the proteins in royal jelly characteristically are not readily degraded with protease, compared with general food proteins. In order to raise the degradation ratio, therefore, the use of a greater amount of enzyme or the preparation of royal jelly in a diluted solution has been required for the treatment thereof.

SUMMARY OF THE INVENTION

It is an objective of the present invention to modify these enzyme processes and to provide an inexpensive method for preparing a clear and stable royal jelly solution with a simplified process.

It is a still further objective of the present invention to provide a method for preparing a clear royal jelly solution with higher recoveries of proteins, total lipids, 10-hydroxydecenic acid, etc.

The above and other objects, features, and advantages of the invention will become fully apparent in the following description.

DETAILED DESCRIPTION OF THE INVENTION

The present inventors have made investigations over a method for producing a clear beverage containing higher concentrations of all of the components of royal jelly, and have found that the degradation ratio of the proteins, in particular the degradation ratio of the proteins that are slightly degradable, can be increased by preparing a royal jelly suspension and subjecting the suspension to the actions of two or more types of protease that differ from each other with respect to action sites of a substrate. Based on the finding, the present invention has been achieved.

The present invention is to provide:

A method for preparing a clear royal jelly solution for the preparation of beverages, which comprises preparing an aqueous suspension of royal jelly, simultaneously or sequentially adding two or more types of protease that differ from each other with respect to action sites of a substrate, maintaining the suspension at a temperature above room temperature, thereby solubilizing the insoluble substances by enzyme reaction; subsequently heating the suspension at 60°C or higher at a pH of 5.0 to 6.0, thereby terminating the enzyme reaction, and then removing the precipitator in the suspension, to prepare a clear royal jelly solution, and using the clear royal jelly solution to prepare beverages.

The royal jelly to be used as the raw material of the present invention is not limited to fresh-type, and other appropriate types, such as frozen or freeze-dried, may be used, depending on the need.

According to the methods of the present invention, water or lukewarm water is first added to royal jelly to prepare a royal jelly suspension. In this case, the recovery of the effective components in royal jelly, particularly of the alcohol-insoluble proteins, is decreased if pretreatment with alcohol (for example ethanol) (purification by filtration) or preparation of the suspension using an alcohol solution is effected, as has been described above. In such a case the objectives of the present invention cannot be achieved. The present invention is characterized in that no such pretreatment or solubilization process with alcohol is effected. The advantage of the present invention characteristically resides in the increase in royal jelly concentration, and a suspension of generally 5 to 70% (% means wt%, the same rule applies corresponding to the following), preferably 5 to 50%, more preferably 10 to 30%, is prepared. Then, the suspension is pH adjusted, using sodium carbonate, sodium hydroxide, or citric acid.

The pH can be adjusted freely in the pH range for the action of the enzymes used, but if the pH is very high, not only the flavor deteriorates but also such deteriorations as dark-brown coloring occur. Therefore the preferable pH for the action is in a range of 2 to 9.

The royal jelly suspension with the pH adjusted is subjected to protein degradation by adding protease. The protease to be used is not specifically limited, and it is possible to use a wide range of proteases generally applied to food processing, including digestive enzymes from mammals, such as pepsin and pancreatin, along with acid protease, neutral protease, and alkali proteases from microorganisms and plants. Two or more types among them, that differ from each other with respect to action sites of a substrate, may be selected and used. Herein the term "proteases that differ from each other with respect to action sites of a substrate" means proteases having different specificity of reaction mode, for example, protease that reacts successively at the terminal of polypeptide chain or protease that reacts at the inside of polypeptide chain, or protease that reacts at an end-group of N or protease that reacts at end-group of C.

The conditions for such enzyme treatment may appropriately be determined, by modifying the type of the enzyme, the addition amount, the reaction temperature or the reaction time. The amount of one kind of enzyme to be added for treatment is generally 20 to 500 units, preferably 50 to 500 units, more preferably 100 to 300 units, per 1 g of royal jelly and treatment is conducted for 2 to 24 hours, preferably 4 to 20 hours, and more preferably 8 to 18 hours. The reaction temperature may be 20 to 60°C, but preferably the temperature is 35 to 50°C, in terms of the prevention of dark brown coloring as well as the degradation ratio.

If two or more types of protease are employed for enzyme treatment, they can be added simultaneously for such treatment, provided that the optimum pH and temperatures of the enzymes are relatively approximate to each other. Such procedure is simple and yields a relatively higher degradation ratio, which is convenient. Alternatively, sequential reaction is carried out if a combination of enzymes with different optimum pHs and temperatures is used for enzyme treatment. In this case, the optimum condition for the action of each enzyme can be set up for the condition for treatment. Thus, there may be obtained royal jelly solutions processed with a combination of a variety of enzymes. By measuring the degradation ratio of proteins over time, the enzyme treatment is terminated at the time when the degradation ratio reaches a maximum. The final degradation ratio varies depending on the enzyme used, but the reaction is terminated at the time when the degradation ratio reaches 75% or more, preferably 85% or more, followed by inactivation of the enzyme through heating at 60°C or higher, preferably 60 to 100°C, more preferably 70 to 90°C, for 5 to 30 minutes, preferably for 10 to 20 minutes. After the termination of the enzyme reaction, impurities and insoluble matters are removed by centrifugation or membrane filtration, to prepare a clear royal jelly solution.

By the enzyme treatment with a combination of two or more types of enzymes as has been described herein so far, the protein degradation ratio is far more increased than that in the case of a single enzyme treatment, along with the achievement of excellent stability when the royal jelly is added to an acid beverage. Some examples are illustrated in which such royal jelly is stable even after the addition thereof to beverage, although the degradation ratio of proteins remains at a low level. The reason for this is not known. The method to treat a royal jelly suspension with two or more types of protease, described above, is highly efficacious for producing a clear royal jelly solution.

Preferable flavor or deliciousness is generally improved in royal jelly if it is treated with protease. It is of importance to select a combination of enzymes in terms of good taste.

In accordance with the present invention, the heating process of the royal jelly suspension after the enzyme treatment is done at pH 5.0 to 6.0 and at 60°C or higher. After the termination of the enzyme reaction, precipitates are then removed by membrane filtration or centrifugation to prepare a clear royal jelly solution. For pH adjustment, there may appropriately be used alkalis, such as sodium hydroxide, potassium hydroxide, etc., and organic acids, such as citric acid, gluconic acid, malic acid, etc. By terminating the enzyme reaction in the defined pH range, the recoveries of crude proteins and total lipids are increased; specifically, the recovery of 10-hydroxydecenic acid, regarded as an effective component in royal jelly, is remarkably increased, concurrently involving an increase of the stability in solubilization of each of the effective components.

Recently, a series of peptides having physiological functions has been identified in edible protein degradation products following treatment with digestive enzymes. In light of the fact that the protein components of royal jelly orally ingested are degraded by pepsin in gastric juice or by protease in succus pancreaticus and then absorbed into body, these substances may possibly be involved in the variety of physiological functions that result from drinking royal jelly. Based on these findings, it is significant to select a combination of enzymes to be used from the viewpoint of maintaining functionality. The objective can be met by the method for preparing a clear royal jelly solution comprising effecting an enzyme process with a combination of mammalian digestive enzymes, such as pepsin and pancreatin, in accordance with the present invention.

The clear royal jelly solution prepared in such fashion may be used as such as a beverage raw material, but the solution must be kept frozen until use because it spoils readily. From the standpoint of preventing spoiling or deterioration or in terms of ready handling, the solution may be concentrated, to which may furthermore be added ethanol or sodium chloride, for preparing a liquid product thereof with a higher antiseptic effect. Also, a desiccating auxiliary, such as dextrin and galactose, may be added to the solution for effecting spray-drying and freeze-drying, to prepare a powdery product.

Subsequently, the royal jelly solution or enzyme may be added to a beverage raw material solution to prepare a beverage solution. The beverage raw materials to be used include the raw materials used in general beverages, such as honey, asellora, vitamin C, rose hip, stevia, glucose, fructose, fruit juice, coffee, wine and liquor, water, etc. These materials are blended together for solubilization, followed by addition of a clear royal jelly solution, to stir the resulting mixture to a homogeneous state, which is then filled aseptically or hot into bottles or cans to prepare royal jelly beverages.

By the method for preparing a clear royal jelly solution, comprising subjecting a royal jelly solution to the action of two or more types of protease that differ from each other with respect to action sites of a substrate in accordance with the present invention, proteins that might cause deterioration of beverages, such as the generation of opaqueness, precipitates, and flocculated matter, are degraded extremely well into lower molecular weight molecules, so that no such possibility exists if the clear royal jelly solution is prepared into beverages.

Furthermore, the process for preparing such royal jelly solution is rendered quite simple, requiring less equipment and being inexpensive, and enables a larger scale production than conventional royal jelly processes.

The solubilized royal jelly obtained by the present method is not significantly different from that of fresh royal jelly in terms of composition. The royal jelly is advantageous in that it has a good taste and all of the components of royal jelly can be utilized effectively.

Particularly, the method for preparing a solubilized royal jelly, comprising treating an aqueous royal jelly suspension with digestive enzymes, such as pepsin, pancreatin, and the like, is a concept satisfying the objective to preliminarily digest the royal jelly proteins slightly digestible for indigestion. With a primary focus on functionality, the method is for preparing a clear royal jelly, concurrently involving the generation of physiologically active peptides.

The present invention will now be described with reference to experimental examples, examples, and comparative examples, but the invention is not limited to them.

The following enzymes are used;

A protease derived from Aspergillus oryzae (protease M with a titer of 5,500 units/g; manufactured by Amano Pharmaceutical Industry, Co. Ltd.) was used as a representative acid protease;

A protease derived from Bacillus subtilis (protease N with a titer of 150,000 units/g; manufactured by Amano Pharmaceutical Industry, Co. Ltd.) was used as a representative neutral protease;

Pepsin (with a titer of 1:10,000; manufactured by Amano Pharmaceutical Industry, Co. Ltd.) and pancreatin (pancreatin F with a titer of 26,000 units/g; manufactured by Amano Pharmaceutical Industry, Co. Ltd.) were used as mammalian digestive enzymes.

Aqueous 10% (w/w) solution of royal jelly was used for enzyme treatment.

Example 1

An aqueous 10% suspension of royal jelly (1 kg) was adjusted to pH 4 using an aqueous 20% solution of sodium hydroxide. To the solution was added 1 g of pepsin, for enzyme treatment at 45°C for 6 hours (pepsin-treated solution). The solution after the treatment was adjusted to pH 8 using an aqueous 20% solution of sodium hydroxide, followed by the addition of 1 g of pancreatin, to effect enzyme treatment at 45°C for 6 hours. The solution after the enzyme treatment was adjusted to pH 5.5 using an aqueous 20% solution of sodium hydroxide, or an aqueous 10% solution of citric acid depending on the pH to be adjusted, and the resulting solution was heated at 80°C for 10 minutes for inactivation of the enzymes. By effecting filtration, impurities and insoluble residues were removed, to obtain a clear royal jelly solution. The royal jelly solution was concentrated under reduced pressure to the weight of the original (intact) fresh royal jelly.

Example 2

To 1 kg of the pepsin-treated solution prepared following the same method as in Example 1, was added 1 g of the acid protease, for enzyme treatment at 45°C for 6 hours. Following the same method as in Example 1 after the termination of the enzyme treatment, a clear royal jelly solution was prepared.

Example 3

One kilogram of the pepsin-treated solution (1 kg) prepared following the same method as in Example 1, was adjusted to pH 7 using an aqueous 20% solution of sodium hydroxide. To the solution was added 1 g of the neutral protease, for enzyme treatment at 45°C for 6 hours. Following the same method as in Example 1 after the termination of the enzyme treatment, a clear royal jelly solution was prepared.

Example 4

One kilogram of an aqueous 10% royal jelly suspension was adjusted to pH 4 using an aqueous 20% solution of sodium hydroxide. To the solution was added 1 g of the acid protease, for enzyme treatment at 45°C for 6 hours (acid protease-treated solution). To the treated solution was added 1 g of pepsin, for enzyme treatment at 45°C for 6 hours. Following the same method as in Example 1 after the termination of the enzyme treatment, a clear royal jelly solution was prepared.

Example 5

One kilogram of the acid protease-treated solution prepared by the same method as in Example 4, was adjusted to pH 7 using an aqueous 20% solution of sodium hydroxide. To the solution was added 1 g of the neutral protease, for enzyme treatment at 45°C for 6 hours. Following the same method as in Example 1 after the termination of the enzyme treatment, a clear royal jelly solution was prepared.

Example 6

One kilogram of the acid protease-treated solution prepared by the same method as in Example 4, was adjusted to pH 8 using an aqueous 20% solution of sodium hydroxide. To the solution was added 1 g of pancreatin, for enzyme treatment at 45°C for 6 hours. Following the same method as in Example 1 after the termination of the enzyme treatment, a clear royal jelly solution was prepared.

Example 7

One kilogram of an aqueous 10% royal jelly suspension was adjusted to pH 7 using an aqueous 20% solution of sodium hydroxide. To the solution was added 1 g of the neutral protease, for enzyme treatment at 45°C for 6 hours (neutral protease-treated solution). followed by the addition of 1 g of pancreatin to effect enzyme treatment of at 45 °C for 6 hours. Again following the same method as in Example 1 after the termination of the enzyme treatment, a clear royal jelly solution was prepared.

Example 8

One kilogram of an aqueous 10% royal jelly suspension was adjusted to pH 4 using an aqueous 20% solution of sodium hydroxide. To the solution was added 0.5 g each of the acid protease and pepsin, for enzyme treatment at 45°C for 6 hours. Following the same method as in Example 1 after the termination of the enzyme treatment, a clear royal jelly solution was prepared.

Example 9

One kilogram of an aqueous 10% royal jelly suspension was adjusted to pH 8 using an aqueous 20% solution of sodium hydroxide. To the solution was added 0.5 g each of the neutral protease and pancreatin, for enzyme treatment at 45°C for 6 hours. Following the same method as in Example 1 after the termination of the enzyme treatment, a clear royal jelly solution was prepared.

Comparative Example 1

After heating the pepsin-treated solution of Example 1, followed by filtration, a clear royal jelly solution was obtained.

Comparative Example 2

After heating the acid protease-treated solution of Example 4, followed by filtration, a clear royal jelly solution was obtained.

Comparative Example 3

One kilogram of an aqueous 10% royal jelly suspension was adjusted to pH 8 using an aqueous 20% solution of sodium hydroxide. To the solution was added 1 g of pancreatin, for enzyme treatment at 45°C for 6 hours. Following the same method as in Example 1, after the termination of the enzyme treatment, a clear royal jelly solution was prepared.

Comparative Example 4

After heating the neutral protease-treated solution of Example 7, followed by filtration, a clear royal jelly solution was obtained.

Experimental Example 1

The royal jelly solutions shown in the Examples and the Comparative Examples were sampled at 0, 2, 4, 6 hours after the initiation of enzyme treatment, to measure the degradation ratio of proteins. The degradation ratio was determined by adding, to 2.0 ml of a sample, an equal amount of 10% trichloroacetic acid (TCA) followed by centrifuging, diluting the supernatant, subjecting the dilution to colorimetric analysis by the Lowry method, and examining the change in the amount of TCA-soluble components. The crude proteins in royal jelly were determined by colorimetric analysis, using a solution with an equal amount of water added instead of the TCA solution and following the procedure thereafter.

The degradation ratio of proteins was determined by the following formula:

$$\text{Degradation ratio} = \frac{(c-b)}{(a-b)} \times 100 \ (\%)$$

wherein

a:     content of crude proteins in royal jelly solution;
b:     content of TCA-soluble components in royal jelly solution;
c:     content of TCA-soluble components in an enzyme-treated sample.

Table 1 shows the protein degradation ratio after 6 hours of treatment. It confirms that the degradation reached a maximum based on the change in the degradation ratio over time. The results indicate that a higher degradation ratio can be yielded by simultaneously or sequentially treating royal jelly solutions with two types of enzymes from different origins than by treating royal jelly solutions with a single enzyme.

Experimental Example 2

Each of the clear royal jelly solutions prepared by the methods shown in the Examples and Comparative Examples, was added to a commercially available drink with acidity (pH 3) to a royal jelly concentration of 2%, followed by thermal sterilization at 100°C for 10 minutes. After cooling, the drinks were left to stand alone, to test the stability and taste (bitterness, deliciousness, astringency) of the drinks. Table 1 shows the results of judging the stability one week later;

Table 2 shows the results of judging taste; and Table 3 shows the composition of the solubilized royal jelly of Example 1. The results shown in Table 1 indicate that the clear royal jelly solution obtained by treating simultaneously or sequentially a royal jelly solution with two types of enzymes from different origins is extremely stable after the addition thereof to drinks, with no possibility of generating opaqueness, precipitates, or flocculated matter.

Table 1

| Degradation ratio of royal jelly proteins by enzyme treatment and stability of enzyme-treated royal jelly in beverage | | |
|---|---|---|
| Enzyme used | Protein degradation ratio (%) | Stability in beverage |
| Examples (two-step treatment) | | |
| 1 Pepsin + Pancreatin | 91.6 | - |
| 2 Pepsin + Acid protease | 76.8 | - |
| 3 Pepsin + Neutral protease | 82.3 | - |
| 4 Acid protease + Pepsin | 75.3 | - |
| 5 Acid protease + Neutral protease | 87.6 | - |
| 6 Acid protease + Pancreatin | 97.6 | - |
| 7 Neutral protease + Pancreatin | 92.2 | - |
| Examples (simultaneous treatment) | | |
| 8 Pepsin + Acid protease | 67.0 | ± |
| 9 Pancreatin + Neutral protease | 92.1 | - |
| Comparative Examples (single treatment with enzyme) | | |
| 1 Pepsin | 17.2 | ††† |
| 2 Acid protease | 30.5 | + |
| 3 Pancreatin | 79.4 | †† |
| 4 Neutral protease | 79.0 | ††† |
| Note: Stability was judged as follows; the degree of opaqueness, and the amount of precipitates and flocculated matters in generation, were classified into ††† to +, depending on the degree and the amount; ± indicates slight opaqueness but with no generation of precipitates; - indicates clear and stable ones. | | |

Table 2

| Organoleptic test of enzyme-treated royal jelly | | | |
|---|---|---|---|
| | Bitterness | Deliciousness | Astringency |
| Example 1 | - | ††† | - |
| Example 2 | †† | - | ††† |
| Example 3 | + | - | + |
| Example 4 | ††† | - | ††† |
| Example 5 | - | - | - |
| Example 6 | - | + | + |
| Example 7 | - | †† | - |
| Example 8 | ††† | + | - |
| Example 9 | - | †† | - |
| Comparative Example 1 | ††† | - | - |
| Comparative Example 2 | - | + | + |
| Comparative Example 3 | - | †† | - |
| Comparative Example 4 | - | + | + |
| Note:<br>Organoleptic test by 10 panelists was employed for determination. 5-Step assessment of 0 to 4 was carried out. Judgment is as follows:<br>†††; sum above 30:<br>††; sum between 29-20:<br>+; sum between 19-10:<br>-; sum below 10. | | | |

Table 3

| Compositions of fresh royal jelly and enzyme-treated solubilized royal jelly (%) | | |
|---|---|---|
| | Fresh royal jelly | Solubilized royal jelly of Example 1 |
| Crude proteins | 12.5 | 12.3 |
| Sugar | 15.0 | 14.8 |
| Lipids | 4.7 | 4.5 |
| Decenic acid | 1.8 | 1.7 |
| Water content | 66.4 | 64.0 |

The results of Tables 1 and 2 show that the treatment with pepsin in Comparative Example 1 results in strong bitterness, whereas the treatment with pepsin and pancreatin (Example 1) provides strong bitterness and stability as well as a taste of distinctive deliciousness, still retaining royal jelly flavor. The treatment with the acid protease in Comparative Example 2 can retain astringency and slight deliciousness with no bitterness, but its taste is bad. The degradation ratio and stability are improved in Example 6 with the combined use of the acid protease and pancreatin, but from the viewpoint of taste, the product of Example 6 is slightly poorer than that of Example 1.

Among those treated with two enzymes, therefore, a combination of 1 and 7, for example, is specifically preferable, in terms of the assessed degradation ratio, stability, and furthermore, taste.

Examples 10 to 12 and Comparative Examples 7 to 11

Following the same method as in Example 1, an aqueous 30% royal jelly suspension was treated stepwise with pepsin and pancreatin. Then the resulting solution was divided. Each of the solutions was adjusted to pH between 3.0 and 6.8, respectively, followed by heating for inactivation of the enzymes. Maintaining the solution temperature at 60°C, filtration was effected. The recoveries of solids, crude proteins, total lipids, and 10-hydroxydecenic acid were then measured, and the results are shown in Table 4. The recovery is shown as the value in percentage of the concentration after filtration divided by the concentration before filtration.

The clear royal jelly solutions, obtained by filtration at the above individual pHs, were diluted 10-fold (a concentration of about 3%), followed by addition of and solubilization with 0.3% (w/v) citric acid. After heating each of the solutions prior to cooling, the presence or absence of precipitates and the like was observed. The results are shown in Table 5.

Table 4

| Example | Comp. Ex. | pH | Recovery (%) | | | |
|---|---|---|---|---|---|---|
| | | | Solids | Crude proteins | Total lipids | 10-hydroxydecenic acid |
| | 7 | 3.0 | 96.1 | 87.5 | 93.9 | 73.1 |
| | 8 | 3.5 | 91.8 | 82.4 | 74.2 | 63.9 |
| | 9 | 4.0 | 90.3 | 86.5 | 76.2 | 68.9 |
| | 10 | 4.5 | 91.8 | 88.2 | 84.2 | 84.1 |
| 10 | | 5.0 | 93.5 | 88.7 | 89.2 | 93.0 |
| 11 | | 5.5 | 93.4 | 89.1 | 93.5 | 97.2 |
| 12 | | 6.0 | 92.2 | 88.7 | 94.4 | 98.1 |
| | 11 | 6.8 | 95.5 | 87.3 | 96.9 | 97.0 |

Table 5

| pH | 3.0 | 3.5 | 4.0 | 4.5 | 5.0 | 5.5 | 6.0 | 6.8 |
|---|---|---|---|---|---|---|---|---|
| Stability[1] | - | - | - | - | - | - | + | †† |

1: cf Note to Table 1

The results in Tables 4 and 5 show that the recovery of each component of the royal jelly solutions adjusted to pH 5.0 to 6.0 prior to filtration, is high on average, and that the thermal stability of the diluted drink is good.

Examples 13 to 14 and Comparative Examples 12 to 21

Following the same method as in Example 10, an aqueous 30% royal jelly suspension was treated stepwise with pepsin and pancreatin, and the resulting solution was divided in two. The solutions were each adjusted to pH 4.0 or 5.5, followed by heating. Maintaining the solution temperature at 20 to 70°C, filtration was effected. The recoveries of total lipids and 10-hydroxydecenic acid were then measured, and the results are shown in Table 6. The recovery was measured as in Example 10.

Table 6

| Ex. | Comp. Ex. | Temperature (°C) | Total lipids (%) | | 10-hydroxydecenic acid | |
|---|---|---|---|---|---|---|
| | | | pH 4.0 | pH 5.5 | pH 4.0 | pH 5.5 |
| | 12 | 20 | 54.0 | | 53.4 | |
| | 13 | 20 | | 90.3 | | 98.3 |
| | 14 | 30 | 57.3 | | 55.2 | |
| | 15 | 30 | | 92.8 | | 96.7 |
| | 16 | 40 | 65.7 | | 63.8 | |
| | 17 | 40 | | 94.1 | | 95.3 |
| | 18 | 50 | 71.3 | | 67.2 | |
| | 19 | 50 | | 93.4 | | 97.5 |
| | 20 | 60 | 76.2 | | 70.7 | |
| 13 | | 60 | | 93.8 | | 98.6 |
| | 21 | 70 | 77.4 | | 77.6 | |
| 14 | | 70 | | 94.2 | | 98.3 |

The results in Tables 6 show that the recovery of total lipids or 10-hydroxydecenic acid through the filtration at pH 5.5 is hardly affected by the filtration temperature (20 to 70°C), and that the recovery gets larger at a higher temperature in the case of pH 4.0, but is far smaller than the recovery in the case of pH 5.5.

Experimental Example 3

Royal jelly was processed as follows:

1. Single treatment with pepsin

An aqueous 30% royal jelly suspension was adjusted to pH 4 by the method shown in Example 1, and to the solution was added a 0.5% pepsin solution followed by enzyme treatment at 45°C for 2 hours. The solution was adjusted to pH 5.5, followed by heating at 80°C for 10 minutes. To the resulting solution was then added Radiolight No. 100 at 0.3% (w/v), followed by filtration at the solution temperature of 60°C (Sample 1).

2. Single treatment with pancreatin

An aqueous 30% royal jelly suspension was adjusted to pH 8.0, and to the solution was added 0.5% pancreatin F followed by enzyme treatment at 45°C for 4 hours. The solution was adjusted to pH 5.5 and subsequently treated by the method shown in the item 1 above (Sample 2).

3. Two-step enzyme treatment with pepsin-pancreatin

An aqueous 30% royal jelly suspension was treated with pepsin and pancreatin in two steps following the same method shown in Example 1. The resulting solution after the termination of enzyme treatment was processed as in Example 1, to prepare a clear royal jelly solution (Sample 3).

4. Two-step enzyme treatment with pepsin-pancreatin, using alcohol solution

A clear royal jelly solution was obtained by the same method described in item 3 above, except that 15% ethanol solution was used for preparing a 30% royal jelly solution (Sample 4).

For each of the royal jelly solutions obtained as described above, the recoveries of solids, crude proteins, total lipids or 10-hydroxydecenic acid and the thermal stability at pH 3.0 were respectively measured. The results are shown in Table 7.

Table 7

| Samples | Recovery (%) | | | | Thermal stability[1] at pH 3.0 |
|---|---|---|---|---|---|
| | Solids | Crude proteins | Total lipids | 10-hydroxydecenic acid | |
| 1 | 73.7 | 52.4 | 82.0 | 80.1 | ††† |
| 2 | 82.0 | 81.1 | 87.2 | 85.7 | † |
| 3 | 93.4 | 89.1 | 93.5 | 97.2 | — |
| 4 | 87.5 | 87.4 | 90.6 | 89.5 | ††† |

1: cf Note to Table 1

The results of Table 7 show that the sample 3 (two-step enzyme treatment) has a higher recovery of each component and excellent thermal stability. That is, the sample 1 (single treatment with pepsin) has a lower recovery of each component (in particular the recovery of crude proteins) and poor thermal stability; the sample 2 (single treatment with pancreatin) has a lower recovery of each component and poor thermal stability; the sample 4 (two-step enzyme treatment in alcohol solution) has a lower recovery of total lipids or 10-hydroxydecenic acid and poor thermal stability.

Comparative Example 5

To 80 g of fresh royal jelly was added 400 ml of water, followed by thorough agitation, to prepare a royal jelly suspension. To the suspension were added 2.4 g each of amylase, cellulase, and lipase, for reaction at 30°C for 2 hours. The solution was adjusted to pH 7.0 with 1N sodium hydroxide, followed by the addition of 1.5 g of 1N protease N, followed by reaction at 55°C for 90 minutes. The pH of the solution was decreased to 4.0 with citric acid, followed by thermal treatment at 95°C for 30 minutes, to obtain a supernatant fraction by centrifugation. Five grams of chitosan beads (1 mm diameter) was added to the fraction and stirred at room temperature for one hour, followed by filtration, to obtain a clear royal jelly solution.

The recovery of each component then was measured. The solution diluted 10-fold and adjusted to pH 3 was tested for thermal stability. The results are shown in Table 8.

Comparative Example 6

To 10 g of fresh royal jelly was added 100 ml of 15% ethanol, followed by addition of 1.0 g of protease M, for reaction at 40°C for 90 minutes. After such thermal treatment, 1 g of chitosan was added and stirred at room temperature for one hour, followed by filtration through a filter, to prepare a clear royal jelly solution.

The recovery of each component was determined based on the concentrations prior to and after the filtration. The stability at each dilution was tested following the same method as in Comparative Example 5. The results are shown in Table 8.

Table 8

| Comparative example | Recovery (%) | | | | Thermal stability[1] at pH 3.0 |
|---|---|---|---|---|---|
| | Solids | Crude proteins | Total lipids | 10-hydroxydecenic acid | |
| 5 | 86.2 | 97 | 59.2 | 82.8 | ± ~ + |
| 6 | 72.2 | 90 | 92.4 | 88.6 | ††† |

1: cf Note to Table 1

The results of Table 8 show that the two-step enzyme treatment with protease in combination with an enzyme other than protease (Comparative Example 5) yielded a relatively good thermal stability but a lower recovery of each component (especially of total lipids); one-step treatment with protease in a 15 % ethanol suspension (Comparative Example 6) yielded a lower recovery and poor thermal stability.

## Claims

1. A method for preparing a clear royal jelly solution for the preparation of beverages, which comprises preparing an aqueous suspension of royal jelly, simultaneously or sequentially adding two or more types of proteases that differ from each other with respect to action sites of a substrate, maintaining the suspension at a temperature above room-temperature, thereby solubilizing the insoluble substances by enzyme reaction, subsequently heating the reacted suspension at 60 °C or higher at a pH of 5.0 to 6.0, thereby terminating the enzyme reaction, and then removing the precipitates in the suspension to prepare a clear royal jelly solution.

2. The method as claimed in claim 1, wherein the protease is selected from mammalian digestive enzymes.

3. The method as claimed in claim 1 or 2, wherein the concentration of royal jelly in the aqueous suspension of royal jelly is 5 to 70 % per weight.

4. The method as claimed in any of claims 1 to 3, wherein the amount of one kind of protease to be added is 20 to 500 units per 1 g of royal jelly.

5. The method as claimed in any of claims 1 to 4, wherein the pH of aqueous royal jelly suspension to be processed by protease is in the range of 2 to 9.

6. The method as claimed in any of claims 1 to 5, wherein the temperature of the aqueous suspension of royal jelly to be processed by protease is maintained in the range of 20 to 60 °C.

7. The method as claimed in any of claims 1 to 7, wherein the time of processing the aqueous suspension of royal jelly by protease is in the range of 2 to 24 h.

8. Use of a clear royal jelly obtained according to any of claims 1 to 7 for the preparation of beverages.

## Patentansprüche

1. Verfahren zur Herstellung einer klaren Königinnengeleelösung für die Herstellung von Getränken, bei dem man eine wässrige Suspension von Königinnengelee herstellt, gleichzeitig oder Zeitlich abgestuft zwei oder mehr Protease-Typen zugibt, die voneinander hinsichtlich der Angriffsstellen eines Substrats abweichen, die Suspension bei einer Temperatur oberhalb Raumtemperatur hält, unlösliche Substanzen durch enzymatische Reaktion solubilisiert, danach die umgesetzte Suspension bei 60 °C oder darüber bei einem pH-Wert von 5,0 bis 6,0 erhitzt, die enzymatische Reaktion beendet und danach die Niederschläge in der Suspension entfernt und eine klare Königinnengeleelösung herstellt.

2. Verfahren nach Anspruch 1, bei dem die Protease unter Säugerverdauungsenzymen ausgewählt ist.

3. Verfahren nach Anspruch 1 oder 2, bei dem die Konzentration des Königinnengelees in der wässrigen Suspension des Königinnengelees 5 bis 70 Gew.-% beträgt.

4. Verfahren nach einem der Ansprüche 1 bis 3, bei dem die Menge an zugegebener Protease eines Proteasetyps 20 bis 500 Einheiten pro 1 g Königinnengelee beträgt.

5. Verfahren nach einem der Ansprüche 1 bis 4, bei dem der pH-Wert der wässrigen Königinnengeleesuspension, die der Einwirkung von Protease zu unterwerfen ist, im Bereich von 2 bis 9 liegt.

6. Verfahren nach einem der Ansprüche 1 bis 5, bei dem die Temperatur der wässrigen Suspension des Königinnengelees, die der Einwirkung von Protease zu unterwerfen ist, im Bereich von 20 bis 60 °C gehalten wird.

7. Verfahren nach einem der Ansprüche 1 bis 7, bei dem die Dauer, die die Protease auf die wässrige Suspension des Königinnengelees einwirkt, im Bereich von 2 bis 24 h liegt.

8. Verwendung eines klaren Königinnengelees, der gemäß einem der Ansprüche 1 bis 7 erhalten wurde, zur Herstellung von Getränken.

**Revendications**

1. Procédé pour préparer une solution de gelée royale transparente pour la préparation de boissons, qui comprend la préparation d'une suspension aqueuse de gelée royale, l'addition simultanée ou successive de deux types ou plus de protéases qui diffèrent l'une de l'autre vis-à-vis des sites d'action d'un substrat, le maintien de la suspension à une température supérieure à la température ambiante, solubilisant ainsi les substances insolubles par réaction enzymatique ; ensuite le chauffage de la suspension ayant réagi à 60 °C ou plus à un pH de 5,0 à 6,0, achevant ainsi la réaction enzymatique, puis l'élimination des précipités dans la suspension pour préparer une solution de gelée royale transparente.

2. Procédé selon la revendication 1, dans lequel la protéase est choisie parmi les enzymes digestives mammifères.

3. Procédé selon la revendication 1 ou 2, dans lequel la concentration de gelée royale dans la suspension aqueuse de gelée royale est 5 à 70 % en poids.

4. Procédé selon l'une quelconque des revendications 1 à 3, dans lequel la quantité d'une sorte de protéase à ajouter est 20 à 500 unités pour 1 g de gelée royale.

5. Procédé selon l'une quelconque des revendications 1 à 4, dans lequel le pH de la suspension aqueuse de gelée royale devant être traitée par une protéase est dans la gamme de 2 à 9.

6. Procédé selon l'une quelconque des revendications 1 à 5, dans lequel la température de la suspension aqueuse de gelée royale devant être traitée par une protéase est maintenue dans la gamme de 20 à 60 °C.

7. Procédé selon l'une quelconque des revendications 1 à 7, dans lequel le temps de traitement de la suspension aqueuse de gelée royale par une protéase est dans la gamme de 2 à 24 h.

8. Utilisation d'une gelée royale transparente obtenue selon l'une quelconque des revendications 1 à 7 pour la préparation de boissons.